# EUROPEAN PATENT APPLICATION

(11) **EP 2 642 438 A1**
(43) Date of publication of application: **25.09.2013**
(21) Application number: 12170461.3
(22) Date of filing: 02.05.2006
(51) Int. Cl.: G06Q 10/10, G06Q 30/02

(54) **Computer system for distributing a validation instruction message**

(30) Priority: 03.05.2005 AU 2005902200
(62) Divisional of application: 06721461.9
(71) Applicant: Pctfiler Holdings Pty Ltd, Sydney, NSW 2001 (AU)
(72) Inventor: Simpson, Justin, Sydney, New South Wales 2111 (AU)
(74) Representative: Korenberg, Alexander Tal

(57) **Abstract**

A computer-implemented system for providing validation instructions to European attorneys. The computer system is designed to send a validation instruction message to a number of European attorneys, asking them to validate a granted European patent. The computer system is designed to communicate with an interface, a specification database and a number of European agents. The system is set up so that when the computer system receives a European patent identifier and a country selection via the interface, the computer system: (a) obtains, from the specification database, a European patent specification corresponding to the European patent identifier; and (b) provides the European patent specification and a validation instruction message to a particular European agent corresponding to the country selection. The system is further adapted to calculate and bill the total validation cost up-front.

## Description

### FIELD OF THE INVENTION

The present Invention relates to methods of validating granted European patent applications and, in particular, to a computer implemented system for providing validation instructions to European attorneys in each country.

### PRIOR ART

Current methods of validating European patents will be known to those skilled in the art and involve a lot of manual handling of papers between clients and their European agents. One disadvantage of current methods is that as each attorney In the chain handles a file, they change the client additional fees, thereby increasing validation costs. Another disadvantage of known methods is that the actual cost of the validation process Is not disclosed to the ollent In advance and clients are often surprised by the high costs when the invoices finally arrive. A further disadvantage of known methods is that because the actual costs are not calculated up-front patent agents cannot bill their fees until the validation process is complete. They then have to wait for the client to pay their bills, which often takes some months.

### THE INVENTION

According to a first aspect of the present invention there is disclosed a computer system for distributing a validation instruction message, the computer system being adapted to communicate with an interface, a specification database and a plurality of European agent computers,
the interface including:
a European patent identifier receiver adapted to receive a European patent identifier; and
a country selection receiver adapted to receive a country selection,
and the specification database being adapted to store a plurality of European patent specifications,
wherein, when the computer system receives a European patent identifier and a country selection, the computer system Is adapted to:
(a) obtain, from the specif cation database, a European patent specification corresponding to the European patent identifier; and
(b) provide the European patent specification and the validation instruction message to a European agent computer corresponding to the country selection.

Preferably, the computer system is adapted to provide the European patent specification to the European agent computer by one or more of the following methods:
(a) sending, to the European agent computer, an email with a copy of the European patent specification attached; and
(b) storing the European patent specification in a remotely-accessible memory and emailing, to the European agent computer, a link enabling access to the stored European patent specification.

Preferably, the computer system stores the European patent specification in the remotely-accessible memory in encrypted form.

Preferably, the validation instruction message Is adapted to instruct a European agent associated with the European agent computer to validate a granted European patent corresponding to the European patent identifier with a patent office of a country corresponding to the country selection.

Preferebly, the computer system is further adapted to calculate a cost of validating a European patent corresponding to the European Patent identifier.

Preferably, the computer system is adapted to display the cost via the interface.

Preferably, the interface includes a word count receiver adapted to receive a word count corresponding to the number of words in the European patent specification.

Preferably, the cost includes a translation cost and wherein the computer system is further adapted to calculate the translation cost with reference to the word count received via the interface.

Preferably, the computer system is adapted to calculate the cost with reference to a lookup table, the lookup table being adapted to store country-specific information relating to one or more of:
(a) agent service fees;
(b) government fees; and
(c) translation fees.

According to a second aspect of the present invention there is disclosed an interface for receiving a European patent validation instruction, the European patent validation instruction including one or more of:
(a) a European patent identifier;
(b) one or more country selections; and
(c) instructor information,
   and the Interface including one or more of:
   (a) a European patent identifier receiver adapted to receive the European patent identifier;
   (b) a country selector adapted to receive the one or more country selections; and
   (c) an instructor information receiver adapted to receive the Instructor information.

Preferably, when the Interface receives a European validation instruction Including a European patent identifier and a country selection it is adapted to instruct a computer system to:
(a) obtain, from a specification database, a European patent specification corresponding to the European patent identifier; and
(b) provide the European patent specification and a validation instruction message to a European agent computer corresponding to the country selection.

### PREFERRED EMBODIMENT

The preferred embodirnents will now be described, by way of example only, with reference to the accompanying drawings in which:
Figure 1 is a block diagram of a computer system for distributing a validation instruction message according to the invention; and
Figures 2a to 2d are successive schematic representations of portions of an interface according to the invention.

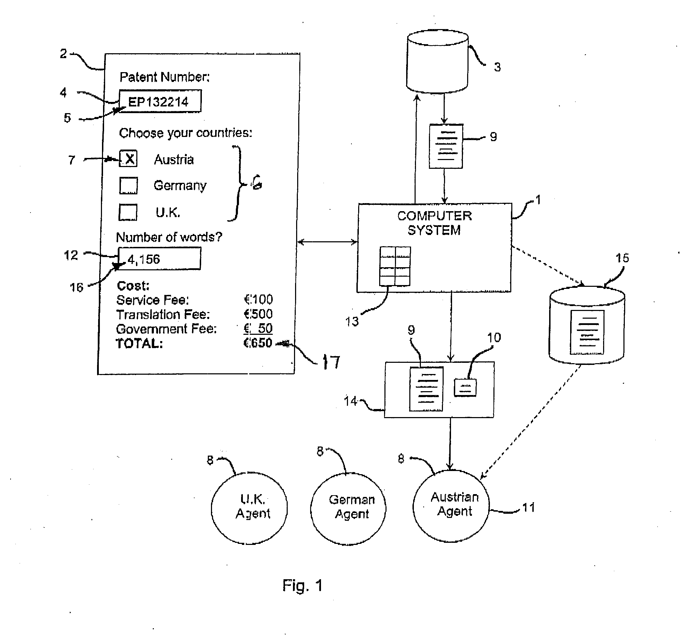

Figure 1 shows the computer system 1 which is designed to send a validation instruction message 10 to a number of European attorneys 8, asking them to validate a granted European patent. The computer system is designed to communicate with an Interface 2, a specification database 3 and a number of European agents 8.

The interface 2 may take the form of an lnternet-accessible website and has a European patent identifier receiver 4 such as a text box. The European patent identifier receiver is designed to receive a European patent identifier 5 such as a European patent number or publication number. This identifier is used to uniquely identify a granted European patent that needs to be validated.

The interface 2, also has a country selection receiver 6 which may take many forms including a text box, radio button, drop-down box, check box to name a few. The country selection receiver 6 is designed to receive a country selection 7 indicating the countries in which the user wants to validate their European patent.

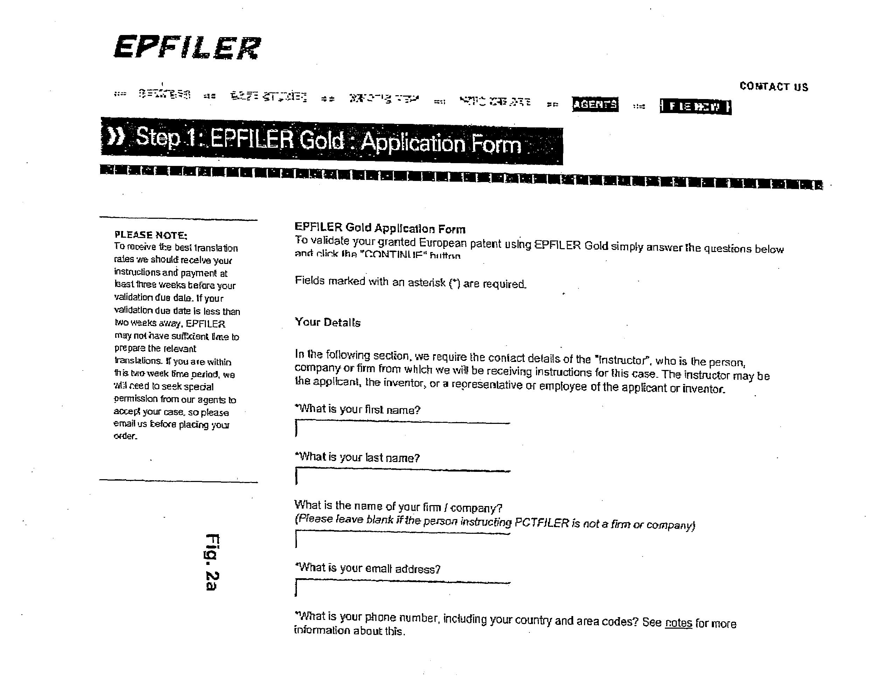

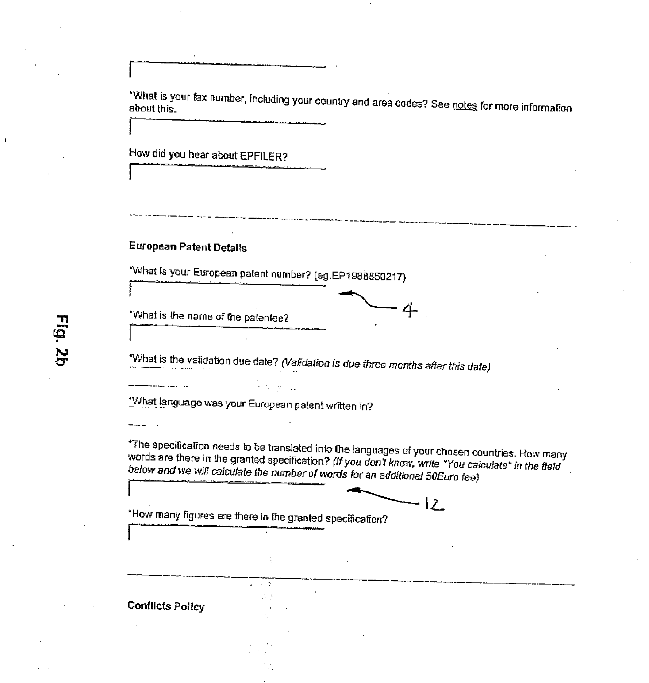

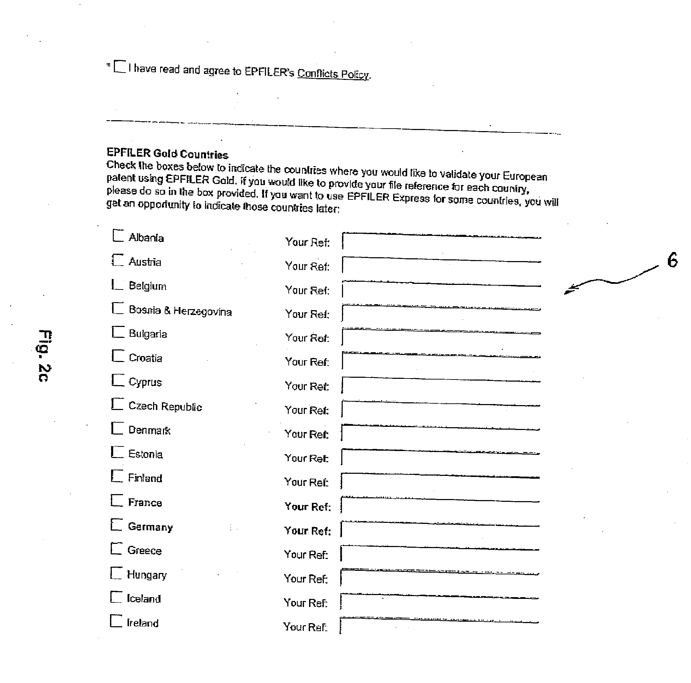

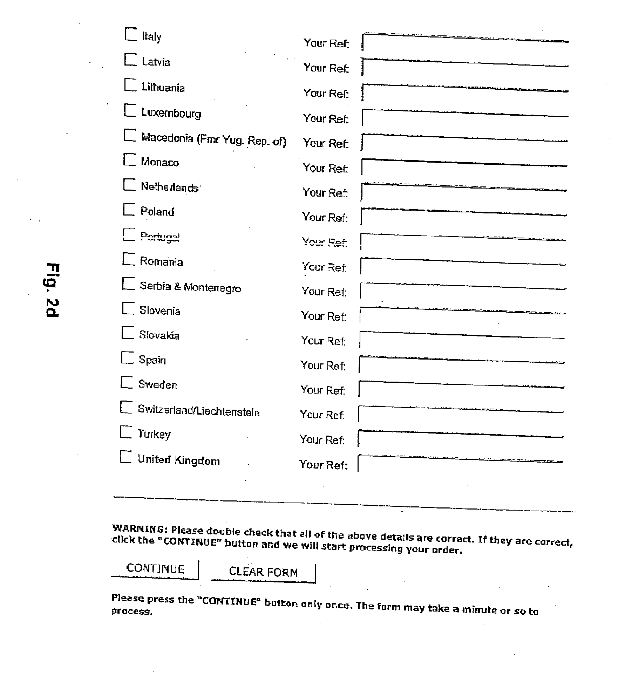

One form of the interface may look similar to the interface shown in Figures 2a to 2d.

Returning to Figure 1, the specification database 3 is designed to store a number of European patent specifications 9. The specification database might take the form of the getthepatent.com databass, the Espacenet database, or any other database that stores the published specifications of granted European patents.

The system is set up so that when the computer system 1 receives a European patent identifier 5 and a country selection 7 via the interface 2, the computer system:
(a) obtains, from the specification database 3, a European patent specification 9 corresponding to the European patent identifier; and
(b) provides the European patent specification 9 and a validation instruction message 10 to a particular European agent 11 corresponding to the country selection.

By sending the specification 9 and the validation instruction message 10 to the European agent 11, the system Instructs that European agent to validate the patent in their country. If required, the validation instruction message also instructs the European agent 11 to translate the specification into the language accepted by their local patent office. Alternatively, the decision to translate is assumed by the European agents, based upor whether or not the specification is in a language accepted by their respective local patent offices.

The computer system might provide the European patent specification 9 to the European agent 11 by sending an email 14 to the European agent with a copy of the European patent specification attached. Alternatively, the computer system might store the European patent specification in a remotely-accessible memory 15 and might just email a link to the stored European patent specification to the European agent. In one form, the computer system stores the European patent specification 15 in the remotely-accessible memory in encrypted form. The remotely accessible memory might take the form of an online document exchange portal such as that found at www.projectiounge.com. Alternative forms of electronically sending the European patent specification to the agent 11 are also envisaged.

Of course, when we say that an email is sent to the European agent, what really happens is that an email is sent to a computer system controlled by the European agent, which the European agsnt can read and act upon.

The preferred embodiment computer system is also able to calculate all of the validation costs, including the attorney fees, the government fees and the translation fees. In this way the client knows all of the costs up front and they can be billed in advance. The attorneys, in turn, can receive their payment quicker.

One of the important factors ir European validation is the translation cost. In order to accurately calculate this cost, the number of words in the specification needs to be known. For this reason, the interface 2 includes a word count receiver 12 such as a text box, adapted to receive a word count 16 corresponding to the number of words in the European patent specification. The computer system calculates the validation cost with reference to a lookup table13. The lookup table stores country-specific information itemising the costs of:
(a) agent service fees;.
(b) government fees; and
(c) translation fees.

The translation costs are calculated by multiplying the word count 16 by the per-word translation rate stored In the lookup table 13. Alternatively, a word count can be initiated automatically by the system, either by counting the words if the specification is in a text format, or by performing OCR (optical character recognition) on the specification if it is provided In an image form. Obviously, since it is only the number of words being counted, the quality of the OCR process is not critical, so long as word gaps are distinguished accurately.

The agents' fees and government fees are added on a per-country basis to reach a total validation cost 17.

Once the cost has been calculated, the computer system displays the cost on the interface. In a preferred embodiment, the computer system is linked to a payment processing system to allow the client to pay the total validation cost straight away. In a preferred form, the system allocates proportions of the fees to each of the European agents 8 and pays them those proportions in an automated manner.

The above system is designed to cut down the paper handling and attorney cost associated with current European patent validation systems. It also allows for up-front calculation and billing of costs, making life easier for both clients and patent agents.

Although the invention has been described with reference to specific examples, it will be appreciated by those skilled in the art that the invention may be embodied in many other forms.

## Claims

1. A computer system for distributing a validation instruction message, the computer system being adapted to communicate with an interface, a specification database and a plurality of European agent computers,
the interface including:
a European patent identifier receiver adapted to receive a European patent identifier; and
a country selection receiver adapted to receive a country selection,
and the specification database being adapted to store a plurality of European patent specifications,
wherein, when the computer system receives a European patent identifier and a country selection, the computer system is adapted to:
(a) obtain, from the specification database, a European patent specification corresponding to the European patent identifier; and
(b) provide the European patent specification and the validation instruction message to a European agent computer corresponding to the country selection.

2. The computer system of claim 1 wherein the computer system is adapted to provide the European patent specification to the European agent computer by one or more of the following methods:
(a) sending, to the European agent computer, an email with a copy of the European patent specification attached; and
(b) storing the European patent specification in a remotely-accessible memory and emailing, to the European agent computer, a link enabling access to the stored European patert specification.

3. The computer system of claim 2 wherein the computer system stores the European patent specification in the remotely-accessible memory in encrypted form.

4. The computer system of claim 1 wherein the validation instruction message is adapted to instruct a European agent associated with the European agent computer to validate a granted European patent corresponding to the European patent identifier with a patent office of a country corresponding to the country selection.

5. The computer system of claim 1 wherein the computer system is further adapted to calculate a cost of validating a European patent corresponding to the European Patent identifier.

6. The computer system of claim 5 wherein the computer system is adapted to display the cost via the Interface.

7. The computer system of claim 5 wherein the interface includes a word count receiver adapted to receive a word count corresponding to the number of words in the European patent specification.

8. The computer system of claim 7 wherein the cost includes a translation cost and wherein the computer system is further adapted to calculate the translation cost with reference to the word count received via the interface.

9. The computer system of claim 5 wherein the computer system is adapted to calculate the cost with reference to a lookup table, the lookup table being adapted to store country-specific information relating to one or more of:
(a) agent service fees;
(b) government fees; and
(c) translation fees.

10. An interface for receiving a European patent validation Instruction, the European patent validation instruction including one or more of:
(a) a European patent identifier;
(b) one or more country selections; and
(c) instructor information,
and the interface including one or more of:
(a) a European patent identifier receiver adapted to receive the European patent identifier;
(b) a country selector adapted to receive the one or more country selections; and
(c) an instructor information receiver adapted to receive the instructor information.

11. The interface of claim 10 wherein when the interface receives a European validation instruction including a European patent identifier and a country selection it is adapted to instruct a computer system to:
(a) obtain, from a specification database, a European patent specification corrosponding to the European patent identifier; and
(b) provide the European patent specification and a validation instruction message to a European agent computer corresponding to the country selection.

12. A computer program comprising program instructions which, when loaded into a computer, constitute the computer system of any one of claims 1 to 9.

13. A computer program comprising program instructions which, when loaded into a computer, constitute the interface of claim 10 or claim 11.

14. A computer program according to claim 12 or claim 13 embodied on a record medium.

15. A computer program according to claim 12 or claim 13 stored in a computer memory.

16. A computer program according to claim 12 or claim 13 embodied in a read-only memory.

17. A computer program according to claim 12 or claim 13 carried on an electrical carrier signal.

18. A computer system substantially as hereinbefore described with reference to the accompanying drawings.

19. An Interface substentially as hereinbefore described with reference to the accompanying drawings.
